# EUROPÄISCHE PATENTSCHRIFT

(11) **EP 4 145 975 B1**
(45) Veröffentlichungstag und Bekanntmachung des Hinweises auf die Patenterteilung: **07.08.2024**
(21) Anmeldenummer: 21727355.6
(22) Anmeldetag: 07.05.2021
(51) Int. Cl.: A01C 7/12, A01C 7/10

(54) **DOSIERVORRICHTUNG FÜR EINE LANDWIRTSCHAFTLICHE MASCHINE**
DOSING DEVICE FOR AGRICULTURAL MACHINE
DISPOSITIF DE DOSAGE POUR MACHINE AGRICOLE

(30) Priorität: 08.05.2020 DE 102020002763
(43) Veröffentlichungstag der Anmeldung: 15.03.2023
(73) Patentinhaber: Lemken GmbH & Co KG, 46519 Alpen (DE)
(72) Erfinder: GOTZEN, Christian, 41751 Viersen (DE); BERGERFURTH, Dennis, 46459 Rees (DE); VALTWIES, Bernd, 48703 Stadtlohn (DE)
(86) Internationale Anmeldenummer: PCT/DE2021/100421
(87) Internationale Veröffentlichungsnummer: WO 2021/223818

(56) Entgegenhaltungen:
- EP-A1- 2 314 142
- EP-A1- 3 008 988
- EP-B1- 2 210 465
- EP-B1- 2 862 431
- DE-A1- 102018 006 660
- DE-B3- 102013 110 991
- US-A- 5 024 356

## Beschreibung

Die vorliegende Erfindung betrifft eine Dosiervorrichtung für eine landwirtschaftliche Maschine zur Ausbringung von körnigen Feststoffen.

Körnige Feststoffe, beispielsweise in Form von Saatgut oder Dünger, werden übelicherweise aus einem Vorratsbehälter zu einer oder mehreren Abgabeeinheiten mittels eines Fördersystems transportiert. Hierfür werden mechanische Fördersysteme oder häufig auch pneumatische Fördersysteme eingesetzt, welche den körnigen Feststoff mittels eines Gebläses über Verbindungsleitungen von dem Vorratsbehälter, beispielsweise durch eine Verteilvorrichtung und einer dort angeschlossenen Mehrzahl an Leitungen, zu den jeweiligen Ausgabeeinheiten fördern. Eine Zufuhr des körnigen Feststoffs aus dem Vorratsbehälter in das Fördersystem wird dabei mittels einer Dosiervorrichtung gesteuert.

Eine derartige Dosiervorrichtung ist beispielsweise aus der US 5 024 356 A bekannt. Aus der EP 1570716 A2 ist eine gattungsgemäße landwirtschaftliche Maschine mit einer Dosiervorrichtung zur Verteilung eines körnigen Feststoffes bekannt. Diese Maschine zur Verteilung eines körnigen Feststoffes weist eine Dosiervorrichtung mit einem oder mehreren auswechselbaren Zellenrädern auf. Die Zellenräder sind in einem Gehäuse angeordnet. Das jeweils in dem Gehäuse angeordnete Zellenrad kann nach Abnahme einer Lagerplatte aus einer seitlichen Öffnung in axialer Richtung aus dem Gehäuse herausgenommen werden. Eine Dosierung des auszubringenden Feststoffes erfolgt dabei lediglich über das Zellenrad, wobei eine Veränderung der auszubringenden Menge lediglich über die Drehzahl der Zellenräder und durch den Einsatz unterschiedlicher Zellenräder möglich ist, wofür jedoch jedesmal eine Unterbrechung des Arbeitsprozesses und eine aufwändige Demontage des eingebauten Zellenrades und anschließende Montage eines neuern Zellenrades erforderlich ist.

Es ist daher die Aufgabe der vorliegenden Erfindung, eine Dosiervorrichtung für eine landwirtschaftliche Maschine bereitzustellen, welche eine kostengünstige Herstellung, eine verbesserte Einstellmöglichkeit und Montage der Dosiervorrichtung ermöglicht.

Die Aufgabe wird gelöst durch eine Dosiervorrichtung gemäß den Merkmalen des Anspruches 1. Vorteilhafte Ausgestaltungen der Erfindung sind in den Unteransprüchen angegeben.

Eine Dosiervorrichtung für eine landwirtschaftliche Maschine zur Ausbringung von körnigen Feststoffen aus mindestens einem Vorratsbehälter zu mindestens einer Abgabeeinheit mittels eines, insbesondere pneumatischen, Fördersystems, umfaßt ein Dosiergehäuse, sowie mindestens einer Zulauföffnung und mindestens einer Auslassöffnung für den körnigen Feststoff, wobei das Dosiergehäuse innenseitig eine Dosierkammer ausbildet, wobei zwischen Dosierkammer und dem Fördersystem eine um eine Drehachse rotierende Fördereinrichtung angeordnet ist. Gemäß der Erfindung weist die Fördereinrichtung mindestens einen ersten Drehschieber mit mindestens einer ersten Öffnung zur Steuerung des Zulaufes und/oder Auslasses des körnigen Feststoffes in die bzw. aus der Fördereinrichtung auf.

Aus dem Vorratsbehälter kann der körnige Feststoff beispielsweise durch die Schwerkraft und die mindestens eine Zulauföffnung in das Dosiergehäuse und die Dosierkammer gelangen. Mehrere körnige Feststoffe können durch zusätzliche Zulauföffnungen in die Dosierkammer zugeführt werden. Die Dosierkammer weist, insbesondere bodenseitig, eine Kammeröffnung auf, welche unmittelbar an die im Dosiergehäuse gelagerte Fördereinrichtung angrenzt, und durch welche der körnige Feststoff mittels Förderelementen in die Fördereinrichtung gelangen kann. Ein für den Zulauf des körnigen Feststoffes in die Fördereinrichtung wirksamer Querschnitt der Kammeröffnung kann durch den, insbesondere ersten, Drehschieber, und insbesondere die erste Öffnung des ersten Drehschiebers, eingestellt werden. Hierdurch kann eine in die Fördereinrichtung zulaufende Menge an körnigem Feststoff eingestellt werden. Eine durch die Fördereinheit geförderte oder dosierte Menge des körnigen Feststoffes kann weiterhin durch eine Drehzahl der Fördereinheit und insbesondere durch die eingesetzten Förderelemente eingestellt werden. Die Förderelemente können beispielsweise auf der Drehachse benachbart zueinander angeordnete Zellenräder gleicher und/oder unterschiedlicher Ausgestaltung sein. Die Förderelemente können auf die zu fördernden körnigen Feststoffe ausgelegt sein, wobei unterschiedliche Förderelemente durch den ersten Drehschieber beispielsweise durch selektive Abdeckung mit unterschiedlichen Feststoffen beschickt werden können. Die Fördereinrichtung kann die mindestens eine Zulauföffnung und die mindestens eine Auslassöffnung, insbesondere druckdicht, voneinander trennen, was insbesondere bei einem pneumatischen Fördersystem vorteilhaft ist. Die Fördereinrichtung kann jedoch auch in Kombination mit einem mechanischen Fördersystem für körnige Feststoffe eingesetzt werden. Durch den Einsatz mindestens eines ersten Drehschiebers kann eine kostengünstige Steuerung der zugeführten Menge an körnigem Feststoff realisiert werden. Zudem können durch die Ausgestaltung des ersten Drehschiebers mit der ersten Öffnung die Einstellmöglichkeiten der Dosiervorrichtung verbessert werden. Aufgrund der zylindrischen Grundform der Dosiervorrichtung kann die Montage der Dosiervorrichtung vereinfacht werden, da diese beispielsweise steckbar ausgeführt werden kann.

In einer bevorzugten Ausgestaltung der Erfindung ist ein Drehschieber derart ausgebildet und angeordnet, dass der Drehschieber rotatorisch und/oder translatorisch um die und/oder entlang der Drehachse der Fördereinrichtung verlagerbar ist. Ein Drehschieber kann rohrförmig oder halbschalenförmig ausgestaltet sein, wodurch eine kostengünstige Herstellung ermöglicht werden kann. Eine Öffnung des Drehschiebers kann in seiner Mantelfläche ausgebildet sein. Durch eine rotatorische und/oder translatorische Verlagerung des Drehschiebers kann eine Öffnung relativ zu Förderelementen unterschiedlich positioniert werden, wodurch mindestens ein bestimmter Feststoff oder unterschiedliche Feststoffe zu der Fördereinrichtung gelangen können.

Erfindungsgemäß weist der erste Drehschieber eine, insbesondere im Wesentlichen der ersten Öffnung gegenüberliegende, zweite Öffnung auf. Durch die zweite Öffnung kann fördersystemseitig beispielsweise eingestellt werden, wohin der aus der Fördereinrichtung austretende Feststoff gelangen soll. Hierbei können unterschiedliche Öffnungen der Dosiervorrichtung oder beispielsweise Verbindungsleitungen des Fördersystems beschickt werden.

In einer weiteren Ausgestaltung der Erfindung weist eine Öffnung eines Drehschiebers mindestens eine drehachsenparallele Kante und/oder profilierte Kante auf. Die drehachsenparallele oder profilierte Kante kann sich im Wesentlichen entlang der Drehachse erstrecken. Eine drehachsenparallele Kante ermöglicht beispielsweise ein störungsfreies Schalten einer Zulauföffnung oder Auslassöffnung. Durch eine profilierte, beispielsweise wellenförmig oder gezackt profilierte, Kante kann insbesondere auslassseitig eine Ablaufpulsation, also kein stoßweises Ausbringen, des Feststoffes in das Fördersystem vermieden werden, da der dosierte Feststoff die Förderelemente nicht schlagartig, sondern zeitlich gestreckt verläßt.

In einer besonders bevorzugten Ausgestaltung der Erfindung weist eine Öffnung eines Drehschiebers mindestens eine in einem Winkel zur Drehachse angeordnete und/oder, insbesondere in axialer Richtung und/oder Umfangsrichtung, stufenförmige Kante auf. Durch eine unter einem Winkel angeordnete oder stufenförmig ausgebildete Kante, insbesondere in axialer Richtung der Drehachse, können durch entsprechende rotatorische und/oder translatorische Verlagerung des Drehschiebers und damit der betreffenden Öffnung einzelne oder mehrere Dosierelemente verschlossen oder geöffnet werden.

In einer besonders bevorzugten Ausgestaltung der Erfindung ist mindestens ein zweiter Drehschieber mit mindestens einer Öffnung, wobei die Drehschieber koaxial und mehrlagig zueinander angeordnet sind. Durch einen zweiten, koaxial und unmittelbar benachbart angeordneten zweiten Drehschieber kann beispielsweise eine zulaufseitige und/oder auslaßseitige Schaltung realisiert werden, welche eine Schaltung des ersten Drehschiebers überlagern könnte. Der zweite Drehschieber kann eine dritte und eine vierte Öffnung aufweisen, wobei die dritte Öffnung dosierkammerseitig angeordnet sein kann und die vierte Öffnung fördersystemseitig zur Einstellung Richtung, in welche der körnige Feststoff aus der Dosiervorrichtung ausgegeben wird. Hierbei kann die dritte Öffnung größer als die vierte Öffnung sein, da beispielsweise unabhängig von der Schaltstellung der vierten Öffnung genug körniger Feststoff durch die dritte Öffnung und den ersten Drehschieber zu der Fördereinrichtung gelangen soll.

In einer weiteren besonders bevorzugten Ausgestaltung der Erfindung weist das Dosiergehäuse fördersystemseitig der Fördereinrichtung eine weitere Auslassöffnung und/oder eine Bypassöffnung auf. Die weitere Auslassöffnung kann zwischen der Fördereinrichtung und dem Fördersystem angeordnet sein, um beispielsweise den Anschluß der Dosiervorrichtung an eine weitere Verbindungsleitung zu ermöglichen. Hierdurch kann ein körniger Feststoff in eine weitere oder ein zweiter körniger Feststoff in eine separate Verbindungsleitung dosiert werden. Die Bypassöffnung kann derart in dem Dosiergehäuse, insbesondere an der Fördereinrichtung, angeordnet und ausgebildet sein, dass ein körniger Feststoff durch die Fördereinrichtung aus dem Dosiergehäuses herausgefördert wird, ohne dabei in das Fördersystem zu gelangen. Die Bypassöffnung kann aus dem Dosiergehäuse, insbesondere durch einen Befestigungsflansch, in die Umgebung herausgeführt werden. Durch die Bypassöffnung kann beispielsweise eine Abdrehprobe zur Kalibrierung der dosierten Menge an körnigem Feststoff durchgeführt werden. Zudem kann ein Entleeren der Dosiervorrichtung ermöglicht werden, ohne dass körniger Feststoff in das Fördersystem gelangt. Die erste Auslassöffnung, die weitere Auslassöffnung und/oder die Bypassöffnung können durch einen Schieber, insbesondere Drehschieber, geöffnet oder geschlossen werden.

Vorzugsweise ist in der Dosierkammer ein Trennelement und/oder fördersystemseitig der Fördereinrichtung eine Trennvorrichtung vorgesehen. Das Trennelement kann die Dosierkammer in zwei Bereiche unterteilen, in welchen unterschiedliche Feststoffe eingebracht und der Fördereinrichtung zugeführt werden können. Durch Schieber- oder Begrenzungselemente, insbesondere durch einen Drehschieber, kann bei geteilter Dosierkammer beispielsweise aus einer ersten Teilkammer und/oder einer zweiter Teilkammer jeweils Feststoff der Fördereinrichtung zugeführt werden, wobei je nach Ausrichtung des Trennelementes eine Förderung der Feststoffe mit allen oder einem Teil der Dosierelemente erfolgen kann. Das Trennelement kann in den Teilkörpern des Dosiergehäuses gelagert sein, und im Wesentlichen parallel oder in einem, insbesondere rechten, Winkel zu der Drehachse angeordnet sein. Das Trennelement kann einstückig oder mehrteilig, insbesondere jeweils anteilig in einem Teilkörper angeformt, ausgebildet sein. Durch das Trennelement können ein oder mehrere Feststoffe der Fördereinrichtung zugeführt werden, ohne dass ein zeitaufwendiges Umstellen oder Reinigen der Dosiervorrichtung erforderlich ist.

Die Trennvorrichtung kann, insbesondere fördersystemseitig, an der Fördereinrichtung zwischen Auslassöffnungen angeordnet sein und ermöglicht ein getrenntes Dosieren von körnigen Feststoffen. Die Trennvorrichtung kann als flächiges Element ausgebildet sein und innerhalb mindestens einer Verbindungsleitung angeordnet sein, wobei die Trennvorrichtung bis an die Fördereinrichtung heranreichen kann. Durch die Trennvorrichtung kann eine Abtrennung der mindestens einen Auslassöffnung und/oder Bypassöffnung erfolgen, um eine störungsfreie Förderung des Feststoffe zu ermöglichen. Die Trennvorrichtung kann innerhalb einer Verbindungsleitung angeordnet sein, um getrennte Förderwege auszubilden.

In einer weiteren bevorzugten Ausgestaltung der Erfindung ist mindestens einem Drehschieber ein Aktuator zur manuell und/oder motorischen Verstellung zugeordnet. Hierdurch kann eine individuelle Einstellung mindestens eines Drehschiebers vorgenommen werden. Die mechanische Einstellung eines Drehschiebers beispielsweise mittels eines Hebels ermöglicht eine kostengünstige und leicht nachvollziehbare Einstellung der Dosiervorrichtung. Eine motorische Verstellung bietet den Vorteil einer fernbedienbaren und/oder automatischen Einstellung der Dosiervorrichtung.

Gemäß einer weiteren Ausgestaltung der Erfindung weist die rotierende Fördereinrichtung einen Antriebsmotor auf, dessen Rotationsachse parallel, insbesondere koaxial, zur Drehachse der Fördereinrichtung angeordnet ist. Durch die koaxiale Anordnung des Antriebsmotors kann ein Antrieb der Fördereinrichtung im Wesentlichen seitenkräftefrei und ohne Momentenversatz erfolgen. Dies bietet den Vorteil einer weniger aufwändigen und einfacheren, kostengünstigeren Konstruktion.

In einer weiterhin bevorzugten Ausgestaltung der Dosiervorrichtung ist der Antriebsmotor weiterhin Aktuator für mindestens einen Drehschieber. Der mindestens eine Drehschieber kann über eine schaltbare Kupplungsvorrichtung mit dem Antriebsmotor zum Einstellen des Drehschiebers verbunden werden. Hierbei kann ein Fördern von körnigem Feststoff und/oder ein Einstellen mindestens eines Drehschieber gleichzeitig und/oder zeitversetzt erfolgen. Ein Vorteil ist dabei, dass der mindestens eine Drehschieber fernbedienbar und/oder automatisch einstellbar sein kann.

Vorzugsweise weist der Drehschieber eine Stirnwand und eine gegenüberliegend Aufnahmeöffnung zur Aufnahme mindestens eines Förderelementes auf. Die Stirnwand kann als Anschlag für die in dem Drehschieber aufgenommen Förderelemente dienen und/oder zur Befestigung des Antriebsmotors oder eines Aktuators. Der Antriebsmotor kann über radial außenseitig angeordnete Nuten, welche sich teilweise entlang des Umfangs erstrecken, mit dem Drehschieber lösbar verbunden werden, wodurch eine kompakte und stabile Einheit geschaffen werden kann, welche einen zuverlässigen Betrieb der Fördereinrichtung ermöglicht.

Die Erfindung betrifft weiterhin eine landwirtschaftliche Maschine zur Ausbringung von körnigen Feststoffen mit einem, insbesondere pneumatischen, Fördersystem zur Beförderung der körnigen Feststoffe aus einem Vorratsbehälter zu einer Anzahl von Abgabeeinheiten mit mindestens einer Dosiervorrichtung, welche wie vorstehend aus- und weitergebildet ist.

In einer bevorzugten Ausgestaltung der landwirtschaftlichen Maschine ist abgabeeinheitsseitig der Dosiervorrichtung mindestens ein an eine Auswerteelektronik angeschlossener Sensor vorgesehen, durch welchen eine dosierte Menge des körnigen Feststoffes detektierbar ist und insbesondere die Fördereinrichtung aufgrund der detektierten Menge des körnigen Feststoffes steuerbar ist, um eine Ausbringmenge der Dosiervorrichtung zu regeln. Der Sensor kann beispielsweise an einer, insbesondere jeder, Verbindungsleitung oder einer, insbesondere jeder, Leitung zu einer Abgabeeinheit angeordnet sein, wodurch eine zuverlässige Erfassung der gesamten dosierten Ausbringmenge ermöglicht werden kann.

Die Erfindung wird nachfolgend anhand von Ausführungsbeispielen näher erläutert.

In den Figuren zeigt:
- Figur 1: eine landwirtschaftliche Maschine mit einer erfindungsgemäßen Dosiervorrichtung in einer schematischen Seitenansicht;
- Figur 2: eine perspektivische, schematische Ansicht einer Dosiervorrichtung;
- Figur 3: eine schematische Draufsicht auf eine Dosiervorrichtung mit einem Trennelement;
- Figur 4: eine perspektivische, schematische Darstellung eines ersten Drehschiebers;
- Figur 5: eine perspektivische, schematische Darstellung der Fördereinrichtung;
- Figur 6: eine perspektivische Seitenansicht einer Dosiervorrichtung mit einer Trennvorrichtung;
- Figur 7: eine perspektivische Darstellung des ersten Drehschiebers, welcher koaxial innerhalb eines zweiten Drehschiebers angeordnet ist; und
- Figur 8: eine perspektivische, schematische Ansicht des zweiten Drehschiebers mit einer alternativ ausgestalteten Kante.

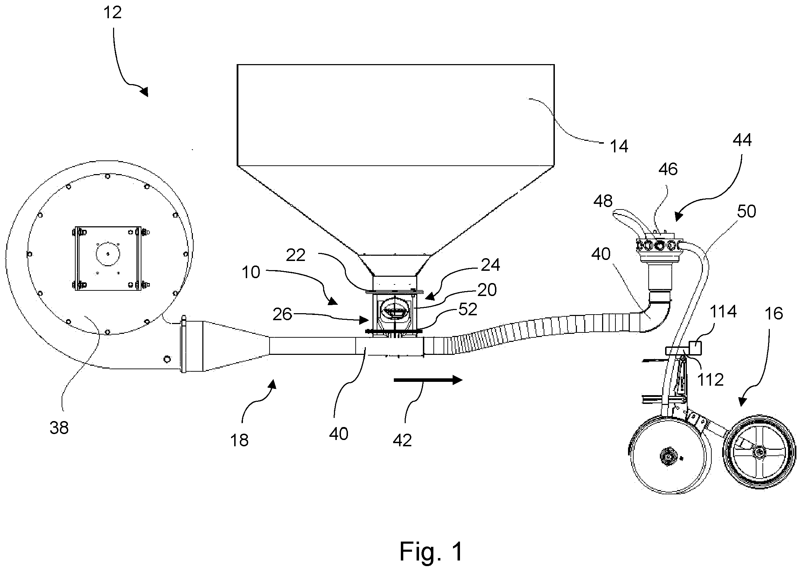

In Figur 1 ist eine landwirtschaftliche Maschine 12 in Form einer Sämaschine in schematischer Seitenansicht dargestellt. In einem Vorratsbehälter 14 befindet sich mindestens ein körniger oder pulverförmiger Feststoff, beispielsweise in Form von Saatgut und/oder Dünger. Der körnige Feststoff wird mittels eines mechanischen oder pneumatischen Fördersystems 18 zu mindestens einer Abgabeeinheit 16 gefördert, wo der körnige Feststoff beispielsweise durch Säschare in den Boden eingebracht werden kann. Das in Fig. 1 dargestellte Fördersystem 18 ist ein pneumatisches Fördersystem 18, bei dem der körnige Feststoff mittels eines Luftstromes, der durch ein Gebläse 38 erzeugt wird, in Förderrichtung 42 durch mindestens eine Verbindungsleitung 40 zu mindestens einer Abgabeeinheit 16 gefördert wird. Der körnige Feststoff wird hierzu durch eine Verbindungsleitung 40 zu mindestens einer Verteilvorrichtung 44 geleitet, in welcher in einer Verteilkammer 46 eine im Wesentlichen gleichmäßige Verteilung des körnigen Feststoffes auf eine Anzahl Verteilöffnungen 48 und daran angeschlossene Leitungen 50 erfolgt. Durch die Leitungen 50 wird der körnige Feststoff weiter bis zu den Abgabeeinheiten 16 geführt. Bei den Abgabeeinheiten 16 kann es sich beispielsweise um Säschare handeln. Der körnige Feststoff kann von dem Luftstrom mit Strömungsgeschwindigkeiten von bis zu 30 m/s bewegt werden.

Aus dem Vorratsbehälter 14 wird der körnige Feststoff mittels einer Dosiervorrichtung 10 in das Fördersystem 18 gefördert, wobei eine genaue Dosierung der Menge des geförderten Feststoffes erfolgt. Die Dosiervorrichtung 10 ist dabei zwischen dem Vorratsbehälter 14 und dem Fördersystem 18 angeordnet, wobei in der in Figur 1 gezeigten landwirtschaftlichen Maschine 12 der körnige Feststoff im Wesentlichen durch die Schwerkraft aus dem Vorratsbehälter 14 der Dosiervorrichtung 10 zugeführt wird. Zur Zufuhr des körnigen Feststoffes weist die Dosiervorrichtung 10 ein Dosiergehäuse 20 mit mindestens einer vorratsbehälterseitigen Zulauföffnung 24 auf. Der dosierte körnige Feststoff wird durch mindestens eine fördersystemseitig in dem Dosiergehäuse 20 angeordnete Auslassöffnung 26 in das Fördersystem 18 abgegeben. Zur vorratsbehälterseitigen und/oder fördersystemseitigen Befestigung an dem Vorratsbehälter 14 und/oder dem Fördersystem 18 weist das Dosiergehäuse 20 Befestigungsflansche 22, 52 auf.

Der vorratsbehälterseitige erste Befestigungsflansch 22 und der fördersystemseitige zweite Befestigungsflansch 52 sind kreisförmig ausgebildet. Eine Ausgestaltung in Form eines Vielecks, insbesondere mit drei oder mehr als vier Ecken, wäre ebenfalls denkbar. Hierdurch kann die Dosiervorrichtung 10, bezogen auf den Vorratsbehälter 14 und/oder das Fördersystem 18, insbesondere schrittweise oder stufenlos, gedreht angeordnet werden. Zur Regelung einer Ausbringmenge der Dosiervorrichtung 10 weist die landwirtschaftliche Maschine 12 abgabeeinheitsseitig der Dosiervorrichtung 10 mindestens ein an eine Auswerteelektronik 114 angeschlossenen Sensor 112 auf, durch welchen eine dosierte Menge des körnigen Feststoffes detektierbar ist und insbesondere die Fördereinrichtung 32 aufgrund der detektierten Menge des körnigen Feststoffes steuerbar ist.

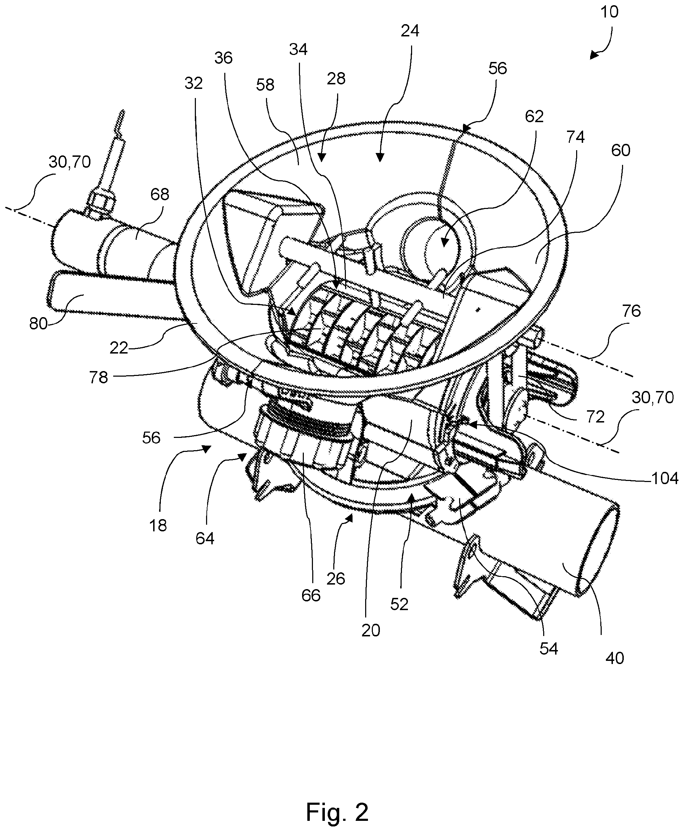

Eine perspektivische, schematische Ansicht einer Dosiervorrichtung 10 ist in Figur 2 dargestellt. Die Dosiervorrichtung 10 ist an ihrer Oberseite nicht mit dem Vorratsbehälter verbunden dargestellt, so dass ein Blick durch die Zulauföffnung 24 in das Innere des Dosiergehäuses 20 und die von diesem innenseitig ausgebildete Dosierkammer 28 gegeben ist. Die Zulauföffnung 24 ist innerhalb des kreisförmigen, ersten Befestigungsflansches 22 des Dosiergehäuses 20 angeordnet und wird von diesem umschlossen. Bodenseitig weist das Dosiergehäuses 20 den zweiten Befestigungsflansch 52 auf, welcher ebenfalls kreisförmig ausgebildet ist. Der zweite Befestigungsflansch 52 umschließt die innerhalb angeordnete erste Auslassöffnung 26, durch welche der körnige Feststoff in das Fördersystem 18 und die Verbindungsleitung 40 gelangt. Der zweite Befestigungsflansch 52 ist mittels eines den Befestigungsflansch 52 umschlingenden Befestigungsmittel 54 in Form eines Schnellspannverschlusses mit dem Fördersystem 18 lösbar verbunden.

Das Dosiergehäuse 20 weist dosierkammerseitig eine erste Ablauföffnung 62 und eine der ersten gegenüberliegende, zweite Ablauföffnung 64 auf, durch welche der körnige Feststoff aus dem Dosiergehäuse 20 abgelassen werden kann, beispielsweise um die Dosierkammer 28 zu entleeren. Die Ablauföffnungen 62, 64 sind mittels eines Ablaufstopfens 66 in Form einer abschraubbaren Kappe verschlossen. Die Ablauföffnungen 62, 64 sind in einer Trennebene 56 des mehrteilig ausgebildeten Dosiergehäuses 20 angeordnet. Das Dosiergehäuse 20 ist als zweiteiliges Gehäuse ausgeführt und weist einen ersten Teilkörper 58 und einen zweiten Teilkörper 60 auf. Die Teilkörper 58, 60 weisen die gleiche, insbesondere identische, Form auf, wodurch die Herstellkosten gesenkt werden können. Durch die Anordnung der Ablauföffnung 62, 64 in der Trennebene 56, können diese kostengünstig und ohne teure Formen mit einem Außengewinde zur Aufnahme eines Ablaufstopfens 66 geformt werden. Zugleich können die Teilkörper 58, 60 an ihrer Trennebene 56 durch die Ablaufstopfen 66 gegen Relativbewegung zueinander gesichert werden.

Innerhalb des Dosiergehäuses 20 ist zwischen der mindestens einen Zulauföffnung 24 und der mindestens einen Auslassöffnung 26, bodenseitig der Dosierkammer 28, eine um eine Drehachse 30 rotierbare Fördereinrichtung 32 angeordnet. Die Fördereinrichtung 32 weist eine Anzahl an Förderelementen 78 in Form von Zellenrädern auf, welche in axialer Richtung entlang der Drehachse 30 benachbart zueinander angeordnet sind. Bei einer Rotation der Fördereinrichtung 32 wird körniger Feststoff aus der Dosierkammer 28 durch die mindestens eine Auslassöffnung 26 in das Fördersystem 18 gefördert. Eine Dosierung des körnigen Feststoffes erfolgt dabei in Abhängigkeit der montierten Förderelemente 78 und der Drehzahl der Fördereinrichtung 32. Die Förderelemente 78 können dabei gleichförmig oder unterschiedlich ausgestaltet oder im Teilungswinkel zueinander versetzt sein. Weiterhin wird die Dosierung durch die der Fördereinrichtung 32 zugeführte Menge an körnigem Feststoff beeinflußt werden. Hierfür weist die Fördereinrichtung 32 mindestens einen ersten Drehschieber 34 mit mindestens einer ersten Öffnung 36 zur Steuerung des Zulaufes des körnigen Feststoffes in die Fördereinrichtung 32 auf. Denkbar ist auch eine Steuerung des Auslasses des körnigen Feststoffes aus der Fördereinrichtung 32. Der erste Drehschieber 34 kann mittels eines Aktuators 80, motorisch oder, wie dargestellt, mittels eines manuell betätigbaren Hebels, verstellt werden.

Ein Antrieb der Fördereinrichtung 32 erfolgt motorisch mittels eines, beispielsweise, elektrischen, Antriebsmotors 68, welcher um eine Rotationsachse 70 rotiert. Die Rotationsachse 70 des Antriebsmotors 68 ist dabei koaxial zur Drehachse 30 der Fördereinrichtung 32 angeordnet, wodurch ein effizienter, seitenkräftefreier Antrieb der Fördereinrichtung 32 ermöglicht wird. Auf der dem Antriebsmotor 68 gegenüberliegenden Seite des Dosiergehäuses 20, ist ein Antrieb für die Rührwelle 74 angeordnet, welche um eine Rührachse 76 drehbar im Dosiergehäuse 20 gelagert ist. Über ein Verbindungselement 72 ist die Rührachse 76 mit der Drehachse 30 wirkverbunden, wodurch bei einer Drehbewegung der Drehachse 30 eine Drehbewegung der Rührachse 76 erfolgt. Mit dem Begriff Achse ist ebenfalls die jeweilige Welle, als mechanisches Bauteil, bezeichnet. Das Verbindungselement 72 kann in Form eines oder mehrerer Zahnräder oder, wie in Figur 2 dargestellt, in Form eines Riementriebes ausgestaltet sein. Durch das Verbindungselement 72 kann zudem ein Übersetzungsverhältnis zwischen den Drehzahlen der Drehachse 30 und der Rührachse 76 erfolgen.

Die Förderelemente 78 der Fördereinrichtung 32 können axial auf die Drehachse 30 aufgeschoben werden, insbesondere in den ersten Drehschieber 34. Eine Verriegelung Fördereinrichtung 32 zur Dosiereinrichtung 20 oder einem Drehschieber 34 kann dabei mittels eines Bajonettverschlusses 104 erfolgen, welcher außenseitig an dem Dosiergehäuse 20 angebracht oder angeformt ist. Bei einem Bajonettverschluss werden an den jeweiligen miteinander zu verbindenden Komponenten zumindest ein, vorzugsweise mehrere, radial abstehende Formschlusselemente axial zueinander positioniert und durch Verdrehen gegeneinander gegen Lösen gesichert.

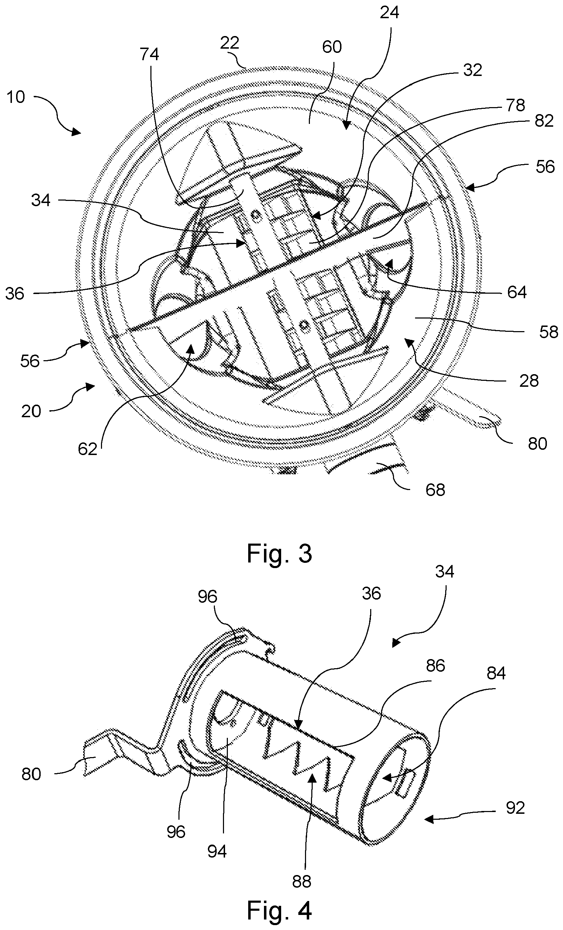

Eine schematische Draufsicht auf eine Dosiervorrichtung 10 mit einem innerhalb der Dosierkammer angeordneten Trennelement 82 ist in Figur 3 dargestellt. Das zweiteilige Dosiergehäuse 20 weist zwischen dem ersten Teilkörper 58 und dem zweiten Teilkörper 60 die Trennebene 56 auf. In der Trennebene 56 ist innerhalb der Dosierkammer 28 das Trennelement 82 angeordnet, welches die Dosierkammer 28 im Wesentlichen in zwei gleich große Teilkammern unterteilt. Dies ermöglicht in jeder Teilkammer einen anderen körnigen Feststoff, beispielsweise durch jeweils eine eigene Zulauföffnung 24 zugeführt, zu dosieren. Das Trennelement 82 kann dabei die Zulauföffnung 24 in zwei Zulauföffnungen unterteilen. Aufgrund der Anordnung und Ausgestaltung der ersten und zweiten Ablauföffnung 62, 64 in der Trennebene 56, werden die Ablauföffnungen 62, 64 ebenfalls durch das Trennelement 82 unterteil, so dass ein getrenntes Ablassen den körnigen Feststoffes aus den Teilkammern möglich ist. Die Rührwelle 74 durchdringt das Trennelement 82, so dass der Feststoff beiderseits des Trennelementes 82 aufgelockert werden kann. Über eine entsprechende Ausgestaltung der ersten Öffnung 36 des ersten Drehschiebers 36 ist eine getrennte oder gemeinsame Dosierung des körnigen Feststoffes aus den Teilkammern möglich.

Der erste Drehschieber ist in Figur 4 im Detail dargestellt. Der Drehschieber 34 ist im Wesentlichen in Form eines Rohrabschnittes mit einer aus der Mantelfläche ausgeschnittener erster Öffnung 36 ausgebildet. Bei einer Rotation des Drehschiebers 34 kann durch die Mantelfläche des Drehschiebers, insbesondere mit der mindestens ersten Öffnung 36, eine Querschnitt einer fördereinrichtungsseitige Öffnung der Dosierkammer vergrößert oder verkleinert werden, wodurch eine Zufuhr an körnigem Feststoff in die Fördereinrichtung gesteuert werden kann. Die erste Öffnung 36 weist, in axialer Richtung, zwei drehachsenparallele Kanten 86 auf, wodurch ein im Wesentlichen ungehinderter Zufluss an körnigem Feststoff in die Fördereinrichtung bewirkt werden kann. Der ersten Öffnung 36 gegenüberliegend ist in der Mantelfläche des ersten Drehschiebers 34 eine zweite Öffnung 84 angeordnet. Die zweite Öffnung 84 ist in einem montierten Zustand des Drehschiebers 34 mindestens einer Auslassöffnung zugeordnet. Die zweite Öffnung 84 weist entlang der Drehachse mindestens eine profilierte Kante 88 auf, wobei Profilierung in gezackter Form ausgebildet ist. Durch diese profilierte Kante 88 kann auslaßseitig eine pulsierende Abgabe von dosiertem, körnigen Feststoff vermieden werden.

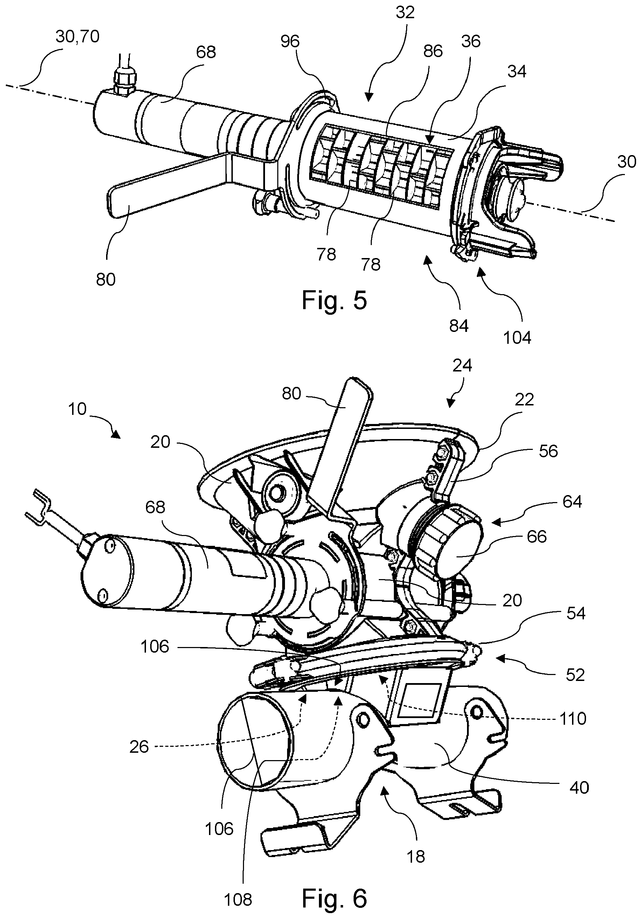

Der erste Drehschieber 34 weist zur Aufnahme von Förderelementen eine Aufnahmeöffnung 92 auf. Der Aufnahmeöffnung 92 gegenüberliegend ist der erste Drehschieber 34 zumindest teilweise durch eine Stirnwand 94 verschlossen, welcher auch als Anschlag für die aufgenommenen Förderelemente dient. Die Stirnwand 94 erstreckt sich in radialer Richtung über den Umfang des Drehschiebers 34 hinaus (Figur 5) und weist außenseitig einen manuell betätigbaren Aktuator 80 zur Verstellung des ersten Drehschiebers 34 auf. Radial außenseitig sind zudem in Umfangrichtung verlaufende Schlitze sowie weitere Durchbrüche angeordnet, welche der Befestigung des Antriebsmotors 68 an dem ersten Drehschieber 34 und/oder der Befestigung und Drehfixierung des Drehschiebers 34 an dem Dosiergehäuse 20 (Fig. 2) dienen. Der Antriebsmotor 68 ist dabei mit seiner Rotationsachse 70 koaxial zur Drehachse 30 der Fördereinrichtung 32 angeordnet. Die Förderelemente 78 sind innerhalb des ersten Drehschiebers 34 wie in einer Kassette angeordnet und werden auf der Seite der Aufnahmeöffnung 92 durch einen teilweise u-förmigen Deckel gehalten, welcher als Bajonettverschluss mit dem Dosiergehäuse 20 verbunden und durch eine Drehbewegung um die Drehachse 30 verriegelt werden kann.

Die in Figur 6 dargestellte Dosiervorrichtung 10 weist fördersystemseitig eine Trennvorrichtung 106 auf, welche die erste Auslassöffnung 26 von einer zweiten Auslassöffnung 108 des Dosiergehäuses 20 trennt. Dies ermöglicht fördersystemseitig eine gezielte Dosierung eines körnigen Feststoffes in die erste und/oder zweite Auslassöffnung 26, 108. Die Trennvorrichtung 106 erstreckt sich von der Fördereinrichtung 32 bis in das Fördersystem 18 und die Verbindungsleitung 40 hinein, wodurch die Verbindungsleitung 40 innenseitig durch die Trennvorrichtung 106 geteilt wird und ein Teil jeder Auslassöffnung 26, 108 zugeordnet ist. Weiterhin weist die Dosiervorrichtung 10 in dem Dosiergehäuse 20 eine Bypassöffnung 110 auf, welche an einer der Dosierkammer 28 gegenüberliegenden Seite der Fördereinrichtung 32 angeordnet ist. Die Bypassöffnung ist neben den Auslassöffnungen 26, 108 in dem Dosiergehäuse 20 angeordnet und ermöglicht das Herausfördern von körnigem Feststoff durch die Fördereinrichtung 32 aus der Dosierkammer 28 beispielsweise in die Umgebung, um eine Abdrehprobe vorzunehmen oder die Dosierkammer 28 zu leeren.

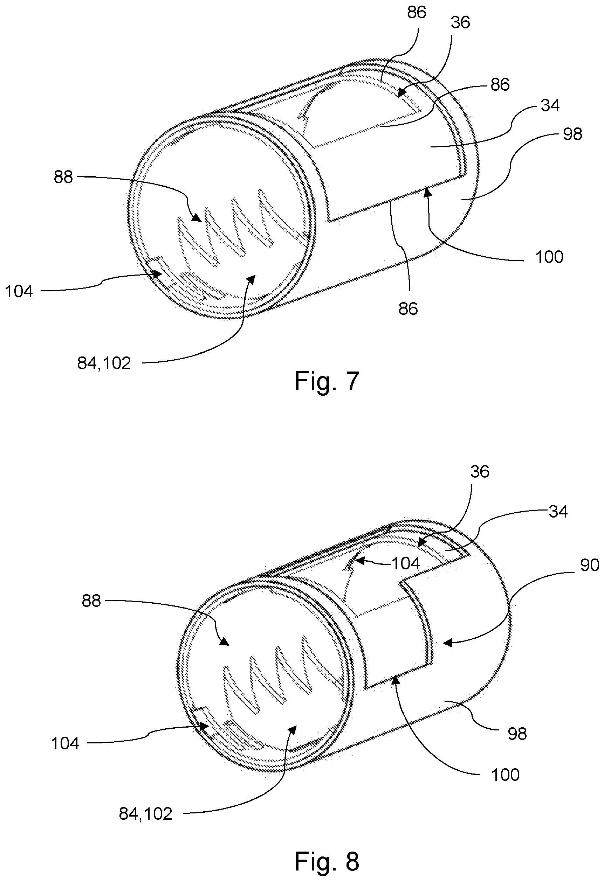

Eine Schaltung der ersten Auslassöffnung 26, der zweiten Auslassöffnung 108 und/oder der Bypassöffnung 110 kann mittels eines weiteren, beispielsweise eines zweiten, Drehschiebers 98 erfolgen, welcher in Figur 7 dargestellt ist. Der zweite Drehschieber 98 ist koaxial und radial benachbart, insbesondere kontaktierend, zu dem ersten Drehschieber 34 angeordnet. Der erste Drehschieber 34 ist dabei innerhalb des zweiten Drehschiebers 98 angeordnet. Der erste Drehschieber 34 weist die erste Öffnung 36 mit mindestens einer drehachsenparallelen Kante 86 zur Steuerung der zugeführten Menge an körnigem Feststoff in die Fördereinrichtung 32 auf. Über die zweite Öffnung 84 mit der profilierten Kante 88 erfolgt die stoßfreie Abgabe des dosierten Feststoffes in die mindestens eine Auslassöffnung (nicht dargestellt). Über den zweiten Drehschieber 98 erfolgt beispielsweise die Steuerung, ob der dosierte, körnige Feststoff in die erste Auslassöffnung, die zweite Auslassöffnung und/oder die Bypassöffnung abgegeben wird. Hierfür weist der zweite Drehschieber 98 zulaufseitig eine dritte Öffnung 100 auf, welche einen im Wesentlichen drehstellungsunabhängigen, ungehinderten Zulauf des Feststoffes ermöglicht. Der dritten Öffnung 100 gegenüberliegend ist eine vierte Öffnung 102 in der Mantelfläche des zweiten Drehschiebers 98 ausgebildet. Die vierte Öffnung 102 kann ebenfalls drehachsparallele Kanten (nicht dargestellt) aufweise und dient der Steuerung der Abgabe des dosierten Feststoffes in die jeweils gewählte Öffnung. Die dritte Öffnung 100 weist dabei einen größeren Querschnitt auf als die vierte Öffnung 102, da durch die dritte Öffnung 100 in jeder Stellung der vierten Öffnung 102 der ungehinderte Zufluß an körnigem Feststoff in die Fördereinrichtung gewährleistet sein soll.

Eine alternativ ausgestaltete Form des zweiten Drehschiebers 98 ist in Figur 8 dargestellt. Die zulaufseitige dritte Öffnung 100 des zweiten Drehschiebers 98 weist entlang der Drehachse eine stufenförmige Kante 90 auf. Hierdurch ist die Mantelfläche des zweiten Drehschiebers 98 in axialer Richtung betrachtet unterschiedlich weit ausgeschnitten. Die ermöglicht, beispielsweise bei einer durch ein Trennelement 82 (Fig. 3) geteilten Dosierkammer eine simultane oder wahlweise Zufuhr von körnigem Feststoff aus den jeweiligen Teilkammern in die Fördereinrichtung Die in die Fördereinrichtung zugeführte Menge an körnigem Feststoff kann dabei weiterhin durch den ersten Drehschieber 34 und dessen erste Öffnung 36 gesteuert werden.

Ein weiterer Drehschieber kann koaxial und in radialer Richtung beabstandet zu dem ersten und/oder zweiten Drehschieber 34, 98 innerhalb des Dosiergehäuses 20 vorgesehen sein. Dieser weitere Drehschieber kann rohrförmig ausgestaltet sein, wobei beispielsweise nur ein Teil seiner Mantelfläche ausgebildet und/oder innerhalb des Dosiergehäuses 20, insbesondere der Dosierkammer 28, angeordnet sein kann. Der weitere Drehschieber kann mit einem Abschnitt seiner Mantelfläche zwischen der Fördereinrichtung 32 und der mindestens einen Rührwelle 74 angeordnet sein. Hierdurch kann der weitere Drehschieber einen Druck des körnigen Feststoffes auf die Fördereinrichtung 32 verringern, wodurch Verstopfungen in der Dosierkammer 28 vermieden und die Zuführung des körnigen Feststoffes zu der Fördereinrichtung 32 verbessert werden kann.

### Bezugszeichen

| | | | |
|---|---|---|---|
| 10 | Dosiervorrichtung | 62 | erste Ablauföffnung |
| 12 | landwirtschaftliche Maschine | 64 | zweite Ablauföffnung |
| 14 | Vorratsbehälter | 66 | Ablaufstopfen |
| 16 | Abgabeeinheit | 68 | Antriebsmotor |
| 18 | Fördersystem | 70 | Rotationsachse |
| 20 | Dosiergehäuse | 72 | Verbindungselement |
| 22 | erster Befestigungsflansch | 74 | Rührwelle |
| 24 | Zulauföffnung | 76 | Rührachse |
| 26 | Auslassöffnung | 78 | Förderelement |
| 28 | Dosierkammer | 80 | Aktuator |
| 30 | Drehachse | 82 | Trennelement |
| 32 | Fördereinrichtung | 84 | zweite Öffnung |
| 34 | erster Drehschieber | 86 | drehachsenparallele Kante |
| 36 | erste Öffnung | 88 | profilierte Kante |
| 38 | Gebläse | 90 | stufenförmige Kante |
| 40 | Verbindungsleitung | 92 | Aufnahmeöffnung |
| 42 | Förderrichtung | 94 | Stirnwand |
| 44 | Verteilvorrichtung | 96 | Schlitz |
| 46 | Verteilkammer | 98 | zweiter Drehschieber |
| 48 | Verteilöffnung | 100 | dritte Öffnung |
| 50 | Leitung | 102 | vierte Öffnung |
| 52 | zweiter Befestigungsflansch | 104 | Bajonettverschluß |
| 54 | Befestigungsmittel | 106 | Trennvorrichtung |
| 56 | Trennebene | 108 | zweite Auslassöffnung |
| 58 | erster Teilkörper | 110 | Bypass-Öffnung |
| 60 | zweiter Teilkörper | 112 | Sensor |
| | | 114 | Auswerteelektronik |

## Patentansprüche

1. Dosiervorrichtung (10) für eine landwirtschaftliche Maschine (12) zur Ausbringung von körnigen Feststoffen aus mindestens einem Vorratsbehälter (14) zu mindestens einer Abgabeeinheit (16) mittels eines Fördersystems (18), mit einem Dosiergehäuse (20), sowie mindestens einer Zulauföffnung (24) und mindestens einer Auslassöffnung (26) für den körnigen Feststoff, wobei das Dosiergehäuse (20) innenseitig eine Dosierkammer (28) ausbildet, wobei zwischen Dosierkammer (28) und dem Fördersystem (18) eine, um eine Drehachse (30), rotierende Fördereinrichtung (32) angeordnet ist, **dadurch gekennzeichnet, dass**
die Fördereinrichtung (32) mindestens einen ersten Drehschieber (34) mit mindestens einer ersten Öffnung (36) zur Steuerung des Zulaufes und/oder Auslasses des körnigen Feststoffes in die bzw. aus der Fördereinrichtung (32) aufweist, wobei der erste Drehschieber (34) eine, insbesondere im Wesentlichen der ersten Öffnung (36) gegenüberliegende, zweite Öffnung (84) aufweist.

2. Dosiervorrichtung nach Anspruch 1, **dadurch gekennzeichnet, dass** ein Drehschieber (34) derart ausgebildet und angeordnet ist, dass der Drehschieber (34) rotatorisch und/oder translatorisch um die und/oder entlang der Drehachse (30) der Fördereinrichtung (32) verlagerbar ist.

3. Dosiervorrichtung nach Anspruch 1 oder 2, **dadurch gekennzeichnet, dass** eine Öffnung (36, 84,) eines Drehschiebers (34) mindestens eine drehachsenparallele Kante (86) und/oder profilierte Kante (88) aufweist.

4. Dosiervorrichtung nach einem der vorhergehenden Ansprüche, **dadurch gekennzeichnet, dass** eine Öffnung (36, 84,) eines Drehschiebers (34,) mindestens eine in einem Winkel zur Drehachse (30) angeordnete und/oder, insbesondere in axialer Richtung und/oder Umfangsrichtung, stufenförmige Kante (90) aufweist.

5. Dosiervorrichtung nach einem der vorhergehenden Ansprüche, **dadurch gekennzeichnet, dass** mindestens ein zweiter Drehschieber (98) mit mindestens einer Öffnung (100, 102), vorgesehen ist, wobei die Drehschieber (34, 98) koaxial und mehrlagig zueinander angeordnet sind.

6. Dosiervorrichtung nach einem der vorhergehenden Ansprüche, **dadurch gekennzeichnet, dass** das Dosiergehäuse (20) fördersystemseitig der Fördereinrichtung (32) eine weitere Auslassöffnung (108) und/oder eine Bypassöffnung (110) aufweist.

7. Dosiervorrichtung nach einem der vorhergehenden Ansprüche, **dadurch gekennzeichnet, dass** in der Dosierkammer (28) ein Trennelement (82) und/oder fördersystemseitig der Fördereinrichtung (32) eine Trennvorrichtung (106) vorgesehen ist.

8. Dosiervorrichtung nach einem der vorhergehenden Ansprüche, **dadurch gekennzeichnet, dass** mindestens einem Drehschieber (34, 98) ein Aktuator (80) zur manuell und/oder motorischen Verstellung zugeordnet ist.

9. Dosiervorrichtung nach einem der vorhergehenden Ansprüche, **dadurch gekennzeichnet, dass** die rotierende Fördereinrichtung (32) einen Antriebsmotor (68) aufweist, dessen Rotationsachse (70) parallel, insbesondere koaxial, zur Drehachse (30) der Fördereinrichtung (32) angeordnet ist.

10. Dosiervorrichtung nach einem der vorhergehenden Ansprüche, **dadurch gekennzeichnet, dass** der Antriebsmotor (68) weiterhin Aktuator für mindestens einen Drehschieber (34, 98) ist.

11. Dosiervorrichtung nach einem der vorhergehenden Ansprüche, **dadurch gekennzeichnet, dass** der Drehschieber (34, 98) eine Stirnwand (94) und eine gegenüberliegend Aufnahmeöffnung (92) zur Aufnahme mindestens eines Förderelementes (78) der Fördereinrichtung (32) aufweist.

12. Landwirtschaftliche Maschine zur Ausbringung von körnigen Feststoffen mit einem, insbesondere pneumatischen, Fördersystem (18) zur Beförderung der körnigen Feststoffe aus einem Vorratsbehälter (14) zu einer Anzahl von Abgabeeinheiten (16) mit mindestens einer Dosiervorrichtung (10) gemäß einem der Ansprüche 1 bis 11.

13. Landwirtschaftliche Maschine nach Anspruch 12, **dadurch gekennzeichnet, dass** abgabeeinheitsseitig der Dosiervorrichtung (10) mindestens ein an eine Auswerteelektronik (114) angeschlossener Sensor (112) vorgesehen ist, durch welchen eine dosierte Menge des körnigen Feststoffes detektierbar ist und insbesondere die Fördereinrichtung (32) aufgrund der detektierten Menge des körnigen Feststoffes steuerbar ist, um eine Ausbringmenge der Dosiervorrichtung (10) zu regeln.

## Claims

1. A metering device (10) for an agricultural machine (12) for outputting granular solids from at least one storage container (14) to at least one dispensing unit (16) by means of a conveyor system (18), having a metering housing (20) and at least one inflow opening (24) and at least one discharge opening (26) for the granular solid, wherein the metering housing (20) forms a metering chamber (28) on the inside, where in between metering chamber (28) and the conveyor system (18) a conveyor device (32) rotating about a rotary axis (30) is arranged.
**characterised in that**
the conveyor device (32) comprises at least one first rotary slide valve (34) having at least one first opening (36) for controlling the inflow and/or discharge of the granular solid into or out of the conveyor device (32), wherein the first rotary slide valve (34) comprises a second opening (84) which is substantially located opposite the first opening (36).

2. The metering device according to Claim 1, **characterised in that** a rotary slide valve (34) is designed and arranged in such a manner that the rotary slide valve (34) can be moved rotationally and/or translationally about and/or along the rotary axis (30) of the conveyor device (32).

3. The metering device according to Claim 1, **characterised in that** an opening (36, 84) of a rotary slide valve (34) comprises at least one rotary axis-parallel edge (86) and/or profiled edge (88).

4. The metering device according to any one of the preceding claims, **characterised in that** an opening (36, 84) of a rotary slide valve (34,) comprises at least one edge (90) that is arranged at an angle to the rotary axis (30) and/or step-shaped in particular in the axial direction and/or circumferential direction.

5. The metering device according to any one of the preceding claims, **characterised in that** at least one second rotary slide valve (98) having at least one opening (100, 102) is provided, wherein the rotary slide valve (34, 98) is arranged coaxially and in multiple tiers relative to one another.

6. The metering device according to any one of the preceding claims, **characterised in that** the metering housing (20) on the conveyor system-side of the conveyor device (32) comprises a further discharge opening (108) and/or a bypass opening (110).

7. The metering device according to any one of the preceding claims, **characterised in that** in the metering chamber (28) a separating element (82) and/or on the conveyor system-side of the conveyor device (32), a separating device (106) is provided.

8. The metering device according to any one of the preceding claims, **characterised in that** an actuator (80) is assigned to at least one rotary slide valve (34, 98) for the manual and/or motorised adjustment.

9. The metering device according to any one of the preceding claims, **characterised in that** the rotating conveyor device (32) comprises a drive motor (68) which rotation axis (70) is arranged parallel, in particular coaxially to the rotary axis (30) of the conveyor device (32).

10. The metering device according to any one of the preceding claims, **characterised in that** the drive motor (68) furthermore is actuator for at least one rotary slide valve (34, 98).

11. The metering device according to any one of the preceding claims, **characterised in that** the rotary slide valve (34, 98) comprises a front wall (94) and a receiving opening (92) for receiving at least one conveyor element (78) of the conveyor device (32) located opposite.

12. An agricultural machine for outputting granular solids having, in particular a pneumatic conveyor system (18) for conveying the granular solids out of a storage container (14) to a number of dispensing units (16) having at least one metering device (10) according to any one of the Claims 1 to 11.

13. The agricultural machine according to Claim 12, **characterised in that** on the dispensing unit-side of the metering device (10), at least one sensor (112) connected to an electronic evaluation system (114) is provided, through which a metered quantity of the granular solid can be detected, and in particular the conveyor device (32) can be controlled based on the detected quantity of the granular solid in order to regulate an output quantity of the metering device (10).

## Revendications

1. Dispositif de dosage (10), destiné à une machine agricole (12), pour l'épandage de matières solides granuleuses à partir d'au moins un réservoir de stockage (14) vers au moins une unité distributrice (16) au moyen d'un convoyeur (18), pourvu d'un carter de dosage (20), et d'au moins une ouverture d'entrée (24) et d'au moins une ouverture de sortie (26) pour la matière solide granuleuse, le carter de dosage (20) constituant sur sa face intérieure un compartiment de dosage (28), entre le compartiment de dosage (28) et le convoyeur (18) étant placé un convoyeur (32) rotatif autour d'un axe de rotation (30),
**caractérisé en ce que**
le convoyeur (32) comporte au moins une première vanne rotative (34) pourvue d'au moins une première ouverture (36) pour la commande de l'entrée et / ou de la sortie de la matière solide granuleuse dans le ou hors du convoyeur (32), la première vanne rotative (34) comportant une deuxième ouverture (84), placée notamment sensiblement au vis-à-vis de la première ouverture (36).

2. Dispositif de dosage selon la revendication 1, **caractérisé en ce qu'**une vanne rotative (34) est conçue et placée de telle sorte que la vanne rotative (34) soit déplaçable en rotation et / ou en translation autour de et / ou le long de l'axe de rotation (30) du convoyeur (32).

3. Dispositif de dosage selon la revendication 1 ou 2, **caractérisé en ce qu'**une ouverture (36, 84) d'une vanne rotative (34) comporte au moins une arête (86) parallèle à l'axe de rotation et / ou une arête (88) profilée.

4. Dispositif de dosage selon l'une quelconque des revendications précédentes, **caractérisé en ce qu'**une ouverture (36, 84) d'une vanne rotative (34,) comporte au moins une arête (90) placée sous un angle par rapport à l'axe de rotation (30) et / ou de forme échelonnée notamment en direction axiale et / ou en direction périphérique.

5. Dispositif de dosage selon l'une quelconque des revendications précédentes, **caractérisé en ce qu'**il est prévu au moins une deuxième vanne rotative (98) pourvue d'au moins une ouverture (100, 102), les vannes rotatives (34, 98) étant placées de manière coaxiale et à multicouches l'une par rapport à l'autre.

6. Dispositif de dosage selon l'une quelconque des revendications précédentes, **caractérisé en ce que** du côté du système de convoyage du convoyeur (32), le carter de dosage (20) comporte une ouverture de sortie (108) supplémentaire et / ou une ouverture de dérivation (110) .

7. Dispositif de dosage selon l'une quelconque des revendications précédentes, **caractérisé en ce que** dans le compartiment de dosage (28) est prévu un élément de séparation (82) et / ou du côté système de convoyage du convoyeur (32) est prévu un dispositif de séparation (106) .

8. Dispositif de dosage selon l'une quelconque des revendications précédentes, **caractérisé en ce qu'**à au moins une vanne rotative (34, 98) est associé est actionneur (80) pour un ajustement manuel et / ou motorisé.

9. Dispositif de dosage selon l'une quelconque des revendications précédentes, **caractérisé en ce que** le convoyeur (32) rotatif comporte un moteur d'entraînement (68), dont l'axe de rotation (70) est placé à la parallèle, notamment de manière coaxiale à l'axe de rotation (30) du convoyeur (32).

10. Dispositif de dosage selon l'une quelconque des revendications précédentes, **caractérisé en ce que** le moteur d'entraînement (68) est par ailleurs un actionneur pour au moins une vanne rotative (34, 98).

11. Dispositif de dosage selon l'une quelconque des revendications précédentes, **caractérisé en ce que** la vanne rotative (34, 98) comporte une paroi frontale (94) et une ouverture de logement (92) placée au vis-à-vis, pour loger au moins une élément de convoyage (78) du convoyeur (32).

12. Machine agricole, destinée à l'épandage de matières solides granuleuses, pourvue d'un convoyeur (18) notamment pneumatique, pour le convoyage de la matière solide granuleuse à partir d'un réservoir de stockage (14) vers un nombre d'unités de distribution (16) avec au moins un dispositif de dosage (10) selon l'une quelconque des revendications 1 à 11.

13. Machine agricole selon la revendication 12, **caractérisée en ce que** du côté distribution du dispositif de dosage (10) est prévu au moins un capteur (112) connecté sur un système électronique d'évaluation (114), par lequel une quantité dosée de la matière solide granuleuse est détectable et le convoyeur (32) est susceptible d'être commandé, notamment sur la base de la quantité détectée de la matière solide granuleuse, pour régler une quantité d'épandage du dispositif de dosage (10).
